# EUROPÄISCHE PATENTANMELDUNG

(11) **EP 4 596 506 A1**
(43) Veröffentlichungstag der Anmeldung: **06.08.2025**
(21) Anmeldenummer: 24155446.8
(22) Anmeldetag: 02.02.2024
(51) Int. Cl.: C02F 11/00

(54) **VERFAHREN ZUM RECYCLING VON PHOSPHOR AUS EINEM PHOSPHOR-HALTIGEN AUFBEREITUNGSSTOFF, PHOSPHOR-HALTIGER FESTSTOFF UND DESSEN VERWENDUNG**

(71) Anmelder: Rosneft Deutschland GmbH, 10117 Berlin (DE)
(72) Erfinder: Arndt, Sebastian, 10117 Berlin (DE); Oelsner, Christopher, 10117 Berlin (DE)
(74) Vertreter: Adares PartGmbB

(57) **Zusammenfassung**

Die Erfindung betrifft ein Verfahren zum Recycling von Phosphor aus einem Phosphor-haltigen Aufbereitungsstoff (1), aufweisend einen Verfahrensschritt:
- Vergasen eines Phosphor-haltigen Aufbereitungsstoffs (1) bei einer Temperatur gleich oder oberhalb von 1000°C, um einen Phosphor-haltigen Feststoff (2) herzustellen. Ferner betrifft die Erfindung einen Phosphor-haltigen Feststoff (2), erhalten nach dem Verfahren und aufweisend einen Gehalt an Blei < 120 mg/kg, einen Gehalt an Cadmium < 2 mg/kg, einen Gehalt an Chrom < 50mg/kg, einen Gehalt an Nickel < 50 mg/kg, einen Gehalt an Quecksilber < 1 mg/kg und/oder einen Gehalt an Zink < 2500 mg/kg, bestimmt nach dem Messverfahren gemäß DIN 51729-10:2011-04, bestimmt nach dem gemäß DIN 51729-10:2011-04, sowie eine Verwendung des Phosphor-haltigen Feststoffs (2) als Ausgangsstoff für die Herstellung eines Düngemittels.

## Beschreibung

Die Erfindung betrifft ein Verfahren zum Recycling von Phosphor aus einem Phosphor-haltigen Aufbereitungsstoff, einen Phosphor-haltigen Feststoff und eine Verwendung des Phosphor-haltigen Feststoffs.

Mit Hilfe von Recyclingverfahren lassen sich wertvolle Rohstoffe zurückgewinnen. Phosphor ist ein sehr wertvoller Rohstoff, denn sein natürliches Vorkommen wird immer knapper, während ein Bedarf an Phosphor weiterhin besteht und in verschiedenen Bereichen steigt. Bereiche, in denen Phosphor in Abhängigkeit seines Vorliegens, seiner Verfügbarkeit und seiner Reinheit Verwendung findet, sind z.B. in der Düngemittelproduktion für die Landwirtschaft, in Nahrungsmitteln als Zusatzstoff, als Korrosions- und Flammschutzmittel sowie in Reinigungsmitteln.

Es ist daher eine Aufgabe der Erfindung, ein Verfahren zum Recycling von Phosphor aus einem Phosphor-haltigen Aufbereitungsstoff und einen Phosphor-haltigen Feststoff und eine Verwendung davon bereitzustellen.

Erfindungsgemäß wird diese Aufgabe durch ein Verfahren mit den Merkmalen des Anspruchs 1, einen Phosphor-haltigen Feststoff mit den Merkmalen des Anspruchs 9 und eine Verwendung mit den Merkmalen des Anspruchs 10 gelöst. Vorteilhafte Modifikationen und Weiterbildungen sind in den Unteransprüchen angegeben.

Mittels des erfindungsgemäßen Verfahrens kann ein Phosphor-haltiger Aufbereitungsstoff kosten- und zeiteffizient verwertet werden, so dass er nicht verbrannt oder anderweitig entsorgt werden muss und dabei den CO₂-Ausstoß in die Atmosphäre erhöht. Vielmehr wird der wertvolle Rohstoff Phosphor aus dem Phosphor-haltigen Aufbereitungsstoff zurückgewonnen und in Form eines Phosphor-haltigen Feststoffs erhalten, der durch den erfindungsgemäßen Verfahrensschritt Schwermetall-arm ist. Dieser Schwermetall-arme, Phosphor-haltige Feststoff eignet sich zur Verwendung als Düngemittel.

Die Erfindung betrifft ein Verfahren zum Recycling von Phosphor aus einem Phosphor-haltigen Aufbereitungsstoff, aufweisend einen Verfahrensschritt:
- Vergasen eines Phosphor-haltigen Aufbereitungsstoffs bei einer Temperatur gleich oder oberhalb von 1000°C, um einen Phosphor-haltigen Feststoff herzustellen.

Ohne an eine Theorie gebunden sein zu wollen, wird von den Erfindern angenommen, dass bei dieser hohen Vergasungstemperatur Schwermetalle, die der Phosphor-haltige Aufbereitungsstoff üblicherweise enthält, mitvergast und/oder weitestgehend ausgetrieben werden und somit in dem mittels des Verfahrens erhaltenen Phosphor-haltigen Feststoffs in Abhängigkeit von ihrer Art nicht oder nur in sehr geringem Maße enthalten sind. Dadurch weist der mittels des Verfahrens erhaltene Phosphor-haltige Feststoff einen so geringen Schwermetall-Anteil auf, dass er auch ohne weitere Schwermetall-Reduktions-Aufbereitung als Düngemittel eingesetzt werden kann.

Im Sinn der vorliegenden Erfindung ist unter dem Ausdruck "Aufbereitungsstoff" wiederverwertbares Altmaterial zu verstehen, das zur Aufbereitung vorgesehen ist. Unter dem Ausdruck "Aufbereitung" ist ein Auswerten, Erschließen oder Nutzbarmachen des Stoffs für eine weitere Verwendung oder Anwendung zu verstehen, so dass der Stoff wiederverwendet oder wieder nutzbar gemacht wird.

Der Phosphor-haltige Feststoff weist bevorzugt einen Gehalt an Blei < 120 mg/kg, einen Gehalt an Cadmium < 2 mg/kg, einen Gehalt an Chrom < 50mg/kg, einen Gehalt an Nickel < 50 mg/kg, einen Gehalt an Quecksilber < 1 mg/kg und/oder einen Gehalt an Zink < 2500 mg/kg, bestimmt nach dem Messverfahren gemäß DIN 51729-10:2011-04 auf. Alternativ oder zusätzlich kann der Gehalt oder können die Gehälter auch mittels DIN ISO 11047:2003-05, DIN EN 13657:2003-01 oder DIN 51429-1:2000-11 gemessen werden. Aufgrund des geringen Gehalts an Schwermetall(en) eignet sich der mittels des Verfahrens erhaltene Phosphor-haltige Feststoff ohne weiteren Aufbereitungsschritt zur Reduzierung des Schwermetall-Anteils als Düngemittel.

In einer bevorzugten Ausführungsform wird die Vergasung bei einer Temperatur im Bereich von 1000 bis 1500°C, bevorzugt im Bereich 1000 bis 1400°C und bevorzugter im Bereich 1000 bis 1300°C ausgeführt. In diesem Temperaturbereich wird die Vergasung effizient durchgeführt, so dass der Phosphor-haltige Feststoff arm an Schwermetallen erhalten wird. Der Reaktor, in dem die Vergasung durchgeführt wird, kann ein Additivbett wie z.B. ein Kalkbett aufweisen. Dadurch können weiterhin Schadstoffe gebunden werden. Ferner kann dadurch eine CO₂-Entwicklung reduziert werden.

Der Phosphor-haltige Aufbereitungsstoff kann zerkleinert oder unzerkleinert eingesetzt werden. Der Phosphor-haltige Aufbereitungsstoff enthält bevorzugt weiterhin Kohlenstoff. Bevorzugt weist der Phosphor-haltige Aufbereitungsstoff eine kompostierbare Masse auf. Bevorzugt enthält die kompostierbare Masse Agrar-, Nahrungs-, Lebensmittel-, Tier-, Schlacht-, Gewerbe-, Siedlungs- und/oder Industrieabfälle. Agrar-, Nahrungs-, Lebensmittel-, Tier- und/oder Schlachtabfälle umfassen jedweden verwertbaren pflanzlichen und/oder tierischen Teil, d.h., nicht nur Faser-, sondern auch flüssige Bestandteile, Sehnen-, Knochen-, Gräten-, Krustenteile von Pflanzen oder Tieren, die auch Fische einschließen. Gewerbe-, Siedlungs- und/oder Industrieabfälle können z.B. Pappe, Papier, Gülle, kommunale Abfälle, Papiermühlenreste wie Papiermühlenschlamm, in der Papiermühle gebrauchte Flüssigkeiten und/oder kompostierbare Kunststoffe umfassen.

Der Phosphor-haltige Aufbereitungsstoff ist bevorzugt Biomasse. Biomasse stellt die gesamte durch Pflanzen oder Tiere erzeugte beziehungsweise anfallende organische Substanz dar, so dass unter dem Ausdruck "Biomasse" eine Stoffmasse der Lebewesen und/oder deren Körper- oder Pflanzenteile zu verstehen ist. Bei der Biomasse handelt es sich bevorzugt um Biomasse aus abgestorbenen und/oder abgetrennten Pflanzenteilen wie z.B. Blätter, Seitensprosse, Zweige und Äste, Laub, Pollen, nicht gekeimte Pflanzensporen und/oder -samen, Früchte, Blüten, Wurzeln oder deren Teile, Streu, ganze Tot-Pflanzen und/oder Totholz, und/oder Biomasse aus abgestorbenen und/oder abgetrennten Körperteilen wie z.B. Haare, Felle, Federn, Schuppen, Knochen, Hufe, Hörner, Borsten, Gräten, Sehnen-, Knorpel-, Haut, Innereien, Eier, Eierschalen, Kadaver oder deren Teile, Tierausscheidungen wie Exkremente. Ferner umfasst die einsetzbare Biomasse Küchen-, Speisen- und sonstige Lebensmittelabfälle.

Der Phosphor-haltige Aufbereitungsstoff weist bevorzugt mindestens eine Komponente auf, die ausgewählt ist aus der Gruppe Klärschlamm, Holz, Agrarabfall, Grün-, Gras- und Baumschnitt, Pflanzen, Stroh, Silage, Nahrungsmittelabfall, Tier- und Schlachtabfall, Papierschlamm und/oder Trester und/ oder Kunststoffabfälle. Agrarabfall weist bevorzugt landwirtschaftlichen Abfall wie pflanzliche Rückstände aus der Landwirtschaft auf, welche insbesondere aus dem Acker- und Gartenbau stammen und alle Teile von Nutzpflanzen umfassen. Nahrungsmittelabfall weist Küchen-, Speisen-, Lebensmittelabfall in rohem und/oder gekochten Zustand pflanzlichen und/oder tierischen Ursprungs auf. Tier- und Schlachtabfall weisen Küchen-, Speisen- und sonstige tierischen Lebensmittelabfälle sowie sämtliche Teile von Tieren auf, die Meerestiere wie Fische einschließen.

Bevorzugt weist der Phosphor-haltige Aufbereitungsstoff Klärschlamm auf. Bevorzugt ist der Klärschlamm entwässerter und/oder getrockneter Klärschlamm. Vorteile entwässerten und/oder getrockneten Klärschlamms sind eine Reduzierung einer Klärschlammmenge, des Klärschlammgewichts und eine bessere Förder- und Dosierbarkeit.

In einer bevorzugten Ausführungsform wird der Phosphor-haltige Aufbereitungsstoff vor dem Verfahrensschritt der Vergasung einem Verfahrensschritt einer hydrothermalen Carbonisierung unterzogen. Die hydrothermale Carbonisierung wird bevorzugt bei einer Temperatur in einem Bereich von 100 bis 400°C und einem Druck von 20 bis 50 atm (2,027 × 10⁶ Pa bis 5,066 × 10⁶ Pa) durchgeführt, um den Phosphor-haltigen Aufbereitungsstoff in einen Phosphor-haltigen Aufbereitungsstoff in Form von Kohle umzuwandeln. Die Kohle wird dann dem Vergasen unterzogen. Bevorzugter liegt die Temperatur der hydrothermalen Carbonisierung im Bereich von 150 bis 350°C, noch bevorzugter im Bereich von 200 bis 300°C.

Bevorzugt wird der Verfahrensschritt des Vergasens unter Verwendung von CO₂ als ein Vergasungsmittel durchgeführt, um Synthesegas herzustellen. Das Synthesegas wird mittels des Verfahrens klima- und umweltfreundlich und vergleichsweise zeit- und kostengünstig bereitgestellt. Das Vergasungsmittel, das oxidierend auf den Kohlenstoff- und Phosphor-haltigen Aufbereitungsstoff wirkt, ist daher im Wesentlichen CO₂. In einer bevorzugten Ausführungsform weist das Vergasungsmittel im Wesentlichen 100 Vol-% CO₂ auf. Alternativ bevorzugt weist das Vergasungsmittel einen Anteil an CO₂ und einen Anteil an H₂O und/oder O₂ auf, der kleiner ist als der Anteil an CO₂. Dem CO₂ können daher geringe Mengen an H₂O oder O₂ zugesetzt werden. Bevorzugter weist das Vergasungsmittel ein Gemisch aus 70 bis 99 Vol.-% CO₂ und 1 bis 30 Vol-% H₂O und/oder O₂ auf. Alternativ bevorzugt weist das Vergasungsmittel ein Gemisch aus 80 bis 98 Vol.-% CO₂ und 2 bis 20 Vol-% H₂O und/oder O₂ auf. In dem Schritt b) wird das CO₂ mit dem Phosphor-haltigen Aufbereitungsstoff insbesondere der mittels der hydrothermalen Carbonisierung erhaltenen Kohle zu CO umgesetzt. Ferner reagiert der Phosphor-haltige Aufbereitungsstoff insbesondere in Form der durch die hydrothermale Carbonisierung erhaltenen Kohle mit H₂O zu CO und H₂. Das Synthesegas weist daher bevorzugt CO und H₂ auf. Während der Vergasung finden bevorzugt folgende Reaktionen statt:

C + CO₂ → 2CO (1)

C + H₂O → CO + H₂ (2)

Das in Reaktionsgleichung (2) als Edukt aufgeführte Wasser kann z.B. als Dampf zugeführt werden. Bevorzugt liegt ein Verhältnis von CO zu H₂ im Bereich von 1:3 bis 30:1, bevorzugter 1:2 bis 25:1. Diese Verhältnisse sind mit dem Verfahren gut erzielbar.

In einer bevorzugten Ausführungsform wird das Vergasen und/oder die hydrothermale Carbonisierung unter Verwendung von Überschussstrom durchgeführt. Bevorzugt handelt es sich bei dem Überschussstrom um aus erneuerbaren Energien erzeugten Strom, der gemäß aktuellem Bedarf am Übertragungsnetz angeschlossenen Verbraucher nicht benötigt wird und daher nur weggespeichert oder beispielsweise für das vorliegende Verfahren genutzt werden kann. Der Überschussstrom kann z.B. aus Windkraftanlagen, Solaranlagen oder dergleichen dem Verfahren zugeführt werden, so dass es für die Erzeugung des benötigten elektrischen Stroms nicht erforderlich ist, fossile Brennstoffe einzusetzen.

Bevorzugt wird mittels des Verfahrens Phosphor aus dem Phosphor-haltigen Aufbereitungsstoff z.B. in Form von Klärschlamm zu mindestens 50 Gew.-% zurückgewonnen. Wird der Phosphor-haltige Aufbereitungsstoff vor dem Vergasen der hydrothermalen Carbonisierung unterzogen, wird bevorzugt Phosphor aus der mittels der hydrothermalen Carbonisierung erhaltenen Asche zu mindestens 80 Gew-%, bevorzugt 85 Gew-%, bevorzugter 90 Gew.-% aus der Asche zurückgewonnen. Verfahren zur Bestimmung des Phosphors sind in dem Fachgebiet bekannt. Bevorzugt weist der Phosphor-haltige Aufbereitungsstoff vor der optionalen hydrothermalen Carbonisierung einen Phosphor-Gehalt von 0,2 bis 5,5 Gew.-% auf.

Bevorzugt wird im Anschluss an den Verfahrensschritt des Vergasens eine Aufbereitung des Phosphor-haltigen Feststoffs ausgeführt, diese kann insbesondere nasschemisch, thermochemisch oder elektrochemisch durchgeführt werden. Dadurch wird sichergestellt, dass der Phosphor in dem Phosphor-haltigen Feststoff pflanzenverfügbar bereitgestellt wird. Die gewählte Aufbereitungsmethode zur weiteren Rückgewinnung des Phosphors hängt von der Zusammensetzung und der Matrix des Phosphor-haltigen Aufbereitungsstoffs ab.

Die Erfindung betrifft ferner einen Phosphor-haltigen Feststoff, erhalten nach einem Verfahren nach einer oder mehrerer der vorstehend beschriebenen Ausführungsformen und aufweisend einen Gehalt an Blei < 120 mg/kg, einen Gehalt an Cadmium < 2 mg/kg, einen Gehalt an Chrom < 50mg/kg, einen Gehalt an Nickel < 50 mg/kg, einen Gehalt an Quecksilber < 1 mg/kg und/oder einen Gehalt an Zink < 2500 mg/kg, bestimmt nach dem Messverfahren gemäß DIN 51729-10:2011-04. Alternativ oder zusätzlich kann der Gehalt oder können die Gehälter auch mittels DIN ISO 11047:2003-05, DIN EN 13657:2003-01 oder DIN 51429-1:2000-11 gemessen werden.

Ferner betrifft die Erfindung eine Verwendung des Phosphor-haltigen Feststoffs, erhalten nach dem Verfahren nach einer oder mehrerer der vorstehend beschriebenen Ausführungsformen, als Ausgangsstoff für die Herstellung eines Düngemittels. Der Phosphor-haltige Feststoff eignet sich hervorragend als Ausgangsstoff eines Düngemittels, weil er mittels des Verfahrens Schadstoff-arm erhalten wird.

Weitere Eigenschaften und Vorteile der Erfindung werden im Zusammenhang mit bevorzugten Ausführungsformen beschrieben, die mit Hilfe der nachfolgenden Figuren und dem nachfolgenden Beispiel näher erläutert werden.

Es zeigt:
- Fig. 1: eine schematische Darstellung eines erfindungsgemäßen Verfahrens; und
- Fig. 2: ein Ablaufdiagramm eines weiteren erfindungsgemäßen Verfahrens.

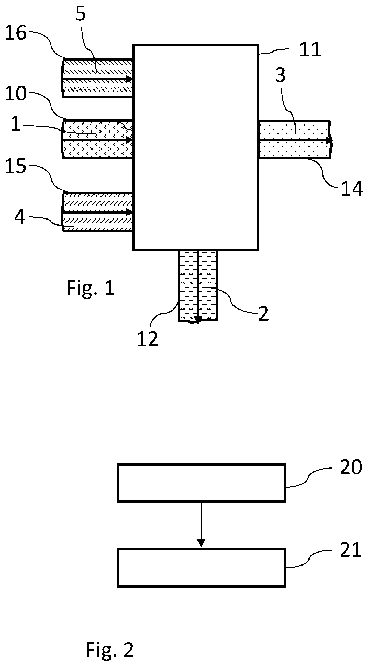

Fig. 1 zeigt eine schematische Darstellung eines erfindungsgemäßen Verfahrens. In dem Verfahren wird einem Reaktor 11 ein Phosphor-haltiger Aufbereitungsstoff 1 mittels einer Zufuhrleitung 10 zugeführt. Dann wird ein Vergasen eines Phosphor-haltigen Aufbereitungsstoffs 1 bei einer Temperatur gleich oder oberhalb von 1000°C ausgeführt. Das Vergasen wird z.B. unter Zuführen eines Vergasungsmittels 4 wie CO₂ mittels einer weiteren Zufuhrleitung 15 und optional Wasserdampf 5 mittels einer noch weiteren Zufuhrleitung 16 ausgeführt. Mittels des Vergasens wird der Phosphor-haltige Feststoff 2 erhalten, der mittels einer Abführleitung 12 aus dem Reaktor 11 entfernbar ist. Zudem wird mittels des Vergasens Synthesegas 3 erhalten, welches über eine weitere Abführleitung 14 aus dem Reaktor 11 entfernbar ist. Der Reaktor 11 kann während der Durchführung des Vergasens ein Additivbett (nicht gezeigt) wie ein Kalkbett aufweisen.

Fig. 2 zeigt ein Ablaufdiagramm eines weiteren erfindungsgemäßen Verfahrens. Das Verfahren weist einen Schritt 20 auf, in dem ein Phosphor-haltiger Aufbereitungsstoff wie z.B. Klärschlamm einer hydrothermalen Carbonisierung bei einer Temperatur in einem Bereich von 100 bis 400°C und einem Druck von 20 bis 50 atm (2,027 × 10⁶ Pa bis 5,066 × 10⁶ Pa) unterzogen wird, um den Phosphor-haltigen Aufbereitungsstoff in Kohle umzuwandeln. An den Schritt 20 schließt sich ein Schritt 21 an, in dem der Phosphor-haltige Aufbereitungsstoff in Form der Kohle bei einer Temperatur im Bereich von 800 bis 1.500°C unter Verwendung von CO₂ als Vergasungsmittel vergast wird, um den Phosphor-haltigen Feststoff herzustellen. Neben dem Phosphor-haltigen Feststoff wird Synthesegas erhalten.

### Beispiel

50 t Biomasse mit einem Kohlenstoffgehalt von 45 Gew.-% und einem Phosphor-Gehalt von 0,5 Gew.-% wurden einer hydrothermalen Carbonisierung bei einer Temperatur von 250°C und einem Druck von 35 atm über eine geeignete Zeitdauer unterzogen. Aus der hydrothermalen Carbonisierung wurden Kohle und Prozesswasser als Produkte erhalten, die durch Filtration voneinander getrennt wurden. Die Kohle wurde weiterhin optional getrocknet. Die aus der hydrothermalen Carbonisierung hergestellte Kohle wurde anschließend bei einer zweiten Temperatur 1200°C unter Verwendung von CO₂ als Vergasungsmittel vergast, wobei weiterhin optional bis zu 30 Vol-% Wasserdampf während der Vergasung dem CO₂ beigemischt wurde. Mittels der Vergasung wurde der Phosphor-haltige Feststoff hergestellt.

### Bezugszeichenliste:

- 1: Phosphor-haltiger Aufbereitungsstoff
- 2: Phosphor-haltiger Feststoff
- 3: Synthesegas
- 4: Vergasungsmittel
- 5: Wasserdampf
- 10: Zufuhrleitung
- 11: Reaktor
- 12: Abführleitung
- 14: weitere Abführleitung
- 15: weitere Zufuhrleitung
- 16: noch weitere Zufuhrleitung
- 20: hydrothermale Carbonisierung
- 21: Vergasen

## Patentansprüche

1. Verfahren zum Recycling von Phosphor aus einem Phosphor-haltigen Aufbereitungsstoff (1), aufweisend einen Verfahrensschritt:
- Vergasen eines Phosphor-haltigen Aufbereitungsstoffs (1) bei einer Temperatur gleich oder oberhalb von 1000°C, um einen Phosphor-haltigen Feststoff (2) herzustellen.

2. Verfahren nach Anspruch 1, **dadurch gekennzeichnet, dass** der Phosphor-haltige Feststoff (2) einen Gehalt an Blei < 120 mg/kg, einen Gehalt an Cadmium < 2 mg/kg, einen Gehalt an Chrom < 50mg/kg, einen Gehalt an Nickel < 50 mg/kg, einen Gehalt an Quecksilber < 1 mg/kg und/oder einen Gehalt an Zink < 2500 mg/kg aufweist, bestimmt nach dem Messverfahren gemäß DIN 51729-10:2011-04.

3. Verfahren nach Anspruch 1 oder 2, **dadurch gekennzeichnet, dass** die Vergasung bei einer Temperatur im Bereich von 1000 bis 1500°C, bevorzugt im Bereich 1000 bis 1400°C und bevorzugter im Bereich 1000 bis 1300°C liegt.

4. Verfahren nach einem der vorangehenden Ansprüche, **dadurch gekennzeichnet, dass** der Phosphor-haltige Aufbereitungsstoff (1) Biomasse, bevorzugt mindestens eine Komponente ausgewählt aus der Gruppe Klärschlamm, Holz, Agrarabfall, Grün-, Gras- und Baumschnitt, Pflanzen, Stroh, Silage, Nahrungsmittelabfall, Tier- und Schlachtabfall, Papierschlamm und/oder Trester und/ oder Kunststoffabfälle aufweist und dass der Phosphor-haltige Aufbereitungsstoff (1) bevorzugt Klärschlamm ist.

5. Verfahren nach einem der vorangehenden Ansprüche, **dadurch gekennzeichnet, dass** der Phosphor-haltige Aufbereitungsstoff (1) vor dem Verfahrensschritt des Vergasens einem Verfahrensschritt einer hydrothermalen Carbonisierung unterzogen wird.

6. Verfahren nach einem der vorangehenden Ansprüche, **dadurch gekennzeichnet, dass** der Verfahrensschritt des Vergasens unter Verwendung von CO₂ als ein Vergasungsmittel durchgeführt wird, um Synthesegas herzustellen.

7. Verfahren nach Anspruch 6, **dadurch gekennzeichnet, dass** das Vergasungsmittel im Wesentlichen 100 Vol-% CO₂ oder ein Gemisch aus 70 bis 99 Vol.-% CO₂ und 1 bis 30 Vol-% H₂O und/oder O₂ oder ein Gemisch aus 80 bis 98 Vol.-% CO₂ und 2 bis 20 Vol-% H₂O und/oder O₂ aufweist.

8. Verfahren nach einem der vorangehenden Ansprüche, **dadurch gekennzeichnet, dass** im Anschluss an den Verfahrensschritt des Vergasens eine nasschemische, thermochemische oder elektrochemische Aufbereitung des Phosphor-haltigen Feststoffs ausgeführt wird.

9. Phosphor-haltiger Feststoff (2), erhalten nach einem Verfahren nach einem der vorangehenden Ansprüche und aufweisend einen Gehalt an Blei < 120 mg/kg, einen Gehalt an Cadmium < 2 mg/kg, einen Gehalt an Chrom < 50mg/kg, einen Gehalt an Nickel < 50 mg/kg, einen Gehalt an Quecksilber < 1 mg/kg und/oder einen Gehalt an Zink < 2500 mg/kg, bestimmt nach dem Messverfahren gemäß DIN 51729-10:2011-04.

10. Verwendung des Phosphor-haltigen Feststoffs (2) nach Anspruch 9 als Ausgangsstoff für die Herstellung eines Düngemittels.
